Europäisches Patentamt

(19) European Patent Office

Office européen des brevets

(11) Numéro de publication: **0 035 933**
**B1**

(12) # FASCICULE DE BREVET EUROPEEN

(45) Date de publication du fascicule du brevet:
04.04.84

(51) Int. Cl.³: **G 11 B 23/02**

(21) Numéro de dépôt: 81400320.8

(22) Date de dépôt: 02.03.81

(54) **Cassette pour disque optique.**

(30) Priorité: 07.03.80 FR 8005197

(43) Date de publication de la demande:
16.09.81 Bulletin 81/37

(45) Mention de la délivrance du brevet:
04.04.84 Bulletin 84/14

(84) Etats contractants désignés:
AT BE CH DE GB IT LI LU NL SE

(56) Documents cités:
FR - A - 2 238 211
FR - A - 2 363 162
FR - A - 2 374 723
FR - A - 2 418 518
FR - A - 2 418 519
US - A - 3 481 656

(73) Titulaire: THOMSON-CSF, 173, Boulevard Haussmann,
F-75379 Paris Cedex 08 (FR)

(72) Inventeur: Llabres, Raymond, THOMSON-CSF
SCPI 173, bld Haussmann, F-75360 PARIS
CEDEX 08 (FR)

(74) Mandataire: Lepercque, Jean et al, THOMSON-CSF
SCPI 173, Bld Haussmann, F-75379 Paris Cedex 08 (FR)

## Cassette pour disque optique

La présente invention se rapporte aux cassettes pour disques optiques qui permettent de ranger et de manipuler des disques à l'abri des dégradations de nature diverse et notamment aux cassettes pour vidéo-disques.

Ces cassettes sont connues sous des noms divers tels que conteneur, pochette protectrice, emballage, cartouche ou encore sous l'appellation anglo-saxone de »caddy«.

On sait que l'on appelle sous le nom générique de vidéo-disques des supports d'informations à haute densité qui permettent d'enrigistrer et de lire, généralement par voi optique, des signaux représentant le plus souvent des images de télévision. Dans le cas plus général du support d'information optique, il peut s'agir d'informations numériques destinées à des systèmes de traitement de données en informatique.

Les éléments d'information se présentent sur le disque sous la forme de perturbations, par exemple décelables optiquement, ayant des dimensions de l'ordre du micron. Il est donc important d'éviter au maximum tout frottement d'un objet sur la ou les faces du disque portant des éléments d'information, et même tout contact quelconque susceptible d'excercer des pressions sur ces faces ou d'y amener des éléments étrangers, tels que poussières par exemple.

Dans le cas d'un disque souple, il n'est pas possible en outre de manipuler ce disque par la tranche comme pour les disques rigides. On est donc amené à concevoir un système de cassette qui, en plus du rangement du disque, permet sa lecture automatique dans l'appareil lecteur, c'est à dire sans intervention de l'opérateur.

De nombreux systèmes de cassettes ont été proposés. Les systèmes les plus anciens se présentent sous une forme analogue à celle des pochettes de disque audio. Dans un système actuellement commercialisé et utilisant une lecture mécanique, le disque est contenu dans une pochette souple en papier, elle-même contenue dans une enveloppe en carton. On introduit cette pochette dans un appareil lecteur où un mécanisme comprenant des rouleaux extrait le disque et le dirige vers un plateau de lecture. Cette pochette souple protège mal le disque et le mécanisme d'extraction appuie sur la face gravée ce qui risque de détériorer à plus ou moins brève échéance le disque. En outre la pochette peut être accidentellement pliée lors de son extraction manuelle de l'enveloppe en carton.

D'autres systèmes plus récents comprennent un tiroir sur le fond duquel repose le disque. Un premier système proposé dans la demande de brevet français n° 75 27 928, déposée le 11 Septembre 1975 et publiée sous le n° 2 324 089 décrit une cassette rigide contenant un tiroir rigide supportant lui-même le vidéo-disque. On introduit la cassette dans l'appareil lecteur où des ergots verrouillent le tiroir, puis on retire la pochette, le tiroir restant maintenu dans le lecteur.

Pendant cette dernière étape, le disque est attiré vers un plateau muni d'un dispositif de préstabilisation et mis en rotation: la lecture s'effectue par voie optique à travers une fente pratiquée dans le plateau.

Une variante de ce système est décrite dans la demande de brevet français n° 76 17 077, déposée le 4 Juni 1976 et publiée sous le n° 2 253 924. La cassette décrite dans cette demande de brevet comprend une pochette souple et un plateau rigide. La pochette est entrainée dans le corps de l'appareil lecteur où elle reste stockée pendant la lecture.

L'appareil lecteur comporte un préstabilisateur. Tout contact entre le disque et le préstabilisateur qui est fixe entraine donc des détériorations importantes de cette face gravée. De plus le disque n'est pas maintenu dans le tiroir et peut donc jouer librement dans la cassette; enfin si la lèvre supérieure de la cassette se déforme, elle peut frotter sur le disque lors du chargement ou du déchargement du lecteur.

Pour éviter le frottement de la face gravée sur le plateau muni d'un préstabilisateur, on a proposé un autre agencement de la cassette dans la demande de brevet français n° 77 20 375, déposée le 1 Juillett 1977 et publiée sous le n° 2 396 380. Cette cassette comprend un plateau qui assure la préstabilisation du disque et sur lequel repose le disque par sa face non gravée. Un couvercle recouvre ce plateau en y appliquant le disque par l'intermédiaire d'un anneau de garde.

Enfin une autre demande de brevet français n° 78 05 338, déposée le 24 Février 1978 et publiée sous le n° 2 418 519 concerne une cassette comprenant un plateau en plastique moulé, possédant une cavité dans laquelle le disque est centré, la face non gravée au contact du plateau, et une pochette en carton. Le maintien du disque dans la cavité est assuré dans une zone centrale par le contact entre un aimant multipolaire solidaire du plateau et des pastilles métalliques collées sur papier rendues solidaires du disque.

Cette dernière approche, bien que remplissant parfaitement les fonctions de protection et de stockage du disque, complique la fabrication de ce dernier par la nécessité du collage du papier muni des pastilles métalliques sur le disque plastique.

Enfin, de tous les systèmes de cassettes à tiroir proposés, aucun ne permet la protection et le stockage de disques gravés sur les deux faces. Or ces disques sont particulièrement, car ils sont les seuls à permettre l'enregistrement sur un seul support d'émissions de longue durée, telle que la retransmission de films long métrage ou l'enregistrement optique à haute densité.

Il est par ailleurs connu, de par la demande de brevet FR-A-2 238 211, un boitier-étui pour disque phonographique comportant un corps et un couvercle carrés articulés l'un sur l'autre par un bord à l'aide d'une charnière. Le corps et le couvercle comprennent des cavités à profils complémentaires permettant l'emmagasinage de disque enregistrés sur les deux faces.

Cependant, l'enseignement de cette demande de brevet ne peut être utilisé dans la cadre spécifique des cassettes du type à tiroir car, du fait de la présence de la charnière, et contrairement à ces dernières cassettes, il permet un centrage automatique de ces cavités, en position fermée et laisse en suspend également tous les problèmes de risques de frottements qui se posent, pour les cassette du type à tiroir, lors des insertions et extractions de celui-ci dans et hors de sa pochette. En outre, il y a nécessairement une manipulation du disque qui doit être retiré du boitier-étui pour être lu, ce qui ne peut être envisagé dans le cadre d'un disque optique, notamment d'un disque souple.

L'invention au contraire, tout en conservant les avantages, notamment, de la demande de brevet FR-A-2 418 519, permet la protection et le stockage de disques portant des informations enregistrées sur leurs deux faces. Elle permet en outre de simplifier ces disques par suppression d'un certain nombre de pièces et d'opérations de fabrication et autorise l'insertion et l'extraction du tiroir dans et hors de sa pochette sans risques de détérioration.

L'invention a donc pour objet une cassette pour disque optique du type comprenant un plateau muni d'une première cavité circulaire destinée à recevoir un disque optique et une pochette destinée contenir le plateau; la pochette étant munie d'une ouverture par laquelle le plateau peut être introduit et le disque optique comportant au moins une zone d'enregistrement délimitée par deux cercles concentriques d'un premier diamètre et d'un second diamètre déterminés; cassette caractérisée en ce qu'elle comporte une deuxième cavité en forme d'anneau pratiquée dans le fond de la première cavité, de diamètres intérieur et extérieur respectivement inférieur et supérieur aux premier et second diamètres déterminés; une troisième cavité également en forme d'anneau, de dimensions sensiblement égales à celles de la deuxième cavité, pratiquée sur la face interne du couvercle de la pochette; les deuxième et troisième cavités étant concentriques lorsque le plateau est introduit dans la pochette et des portées coniques complémentaires pratiquées en périphérie des première et troisième cavités en forme d'anneau, en appui l'une sur l'autre lorsque le plateau est à l'intérieur de la pochette.

L'invention sera mieux comprise et d'autres avantages apparaîtront à l'aide de la description qui suit, en référence aux figures annexées:

— la figure 1 est un exemple de réalisation de cassette selon l'art connu;

— la figure 2 est un exemple de réalisation du plateau porte-disque d'une cassette de l'invention;

— la figure 3 est un exemple de réalisation d'une pochette pour le plateau de la figure 2;

— les figures 4 à 10 illustrent de façon détaillée différents aspects de l'invention.

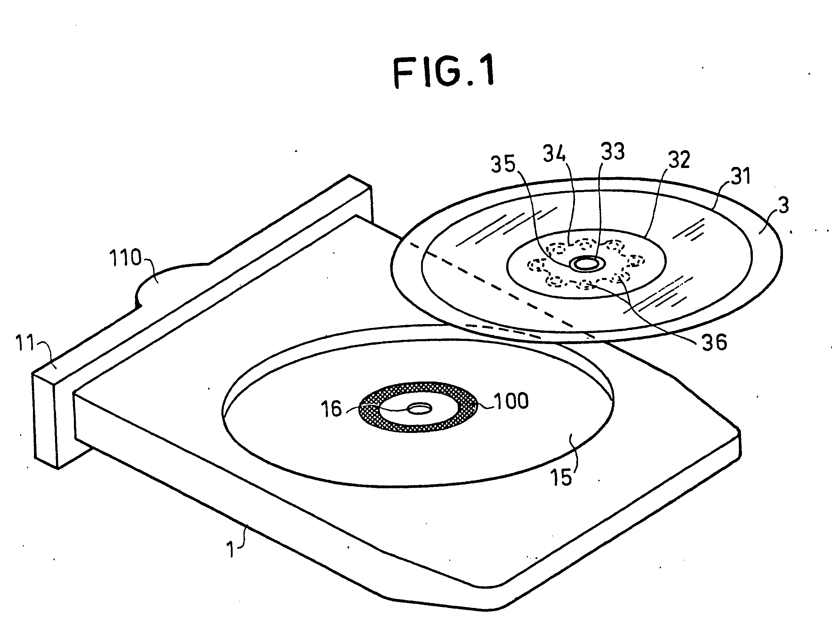

— la figure 1 représente le plateau d'une cassette selon une approche de l'art connu, décrite dans la dernière demande de brevet français précitée n° 78 05 338. La cassette comprend dans une pochette rectangulaire en carton contrecollé de papier (non représentée) un plateau moulé dans une matière la moins électro-statique possible, du polyamide 6.6 par exemple.

Ce plateau 1 a la forme d'une plaque rectangulaire dont l'épaisseur a été volontairement grossie sur la figure pour faciliter la représentation et qui est terminée du côté postérieur (en arrière sur la figure) par un épaulement 11 dont l'épaisseur est sensiblement celle des parois de la pochette. Cet épaulement vient buter contre l'extrémité ouverte de la pochette et empêche donc le plateau de pénétrer complétement dans cette pochette; on maintient ainsi libre une tirette de forme arrondie 110 qui est munie sur sa face inférieure (cachée sur la figure) d'un évidement triangulaire permettant l'accrochage d'un téton d'extraction fixé à l'appareil lecteur. Le côté antérieur de la plaque est profilé de manière à faciliter l'introduction dans la pochette.

Une cavité circulaire 15 est creusée sur la face supérieure de la plaque pour pouvoir loger le disque 3, face gravée vers le haut. Le diamètre de cette cavité est légèrement supérieur à celui du disque. Un trou central 16 permet le passage de l'axe d'entrainement du disque 3 quand la cassette est placée dans l'appareil lecteur.

Si la cassette était limitée aux moyens décrits jusqu'à présent le disque flotterait librement dans la cavité 15 parce qu'il est nécessaire de prévoir un jeu radial même minime, et sa face gravé pourrait venir en contact avec l'intérieur de la pochette et frotter sur celle-ci, ce qui entrainerait de grave dégâts au niveau de la gravure.

Pour éviter ce frottement on a ménagé dans le fond de la cavité 15 une gorge circulaire et concentrique à cette cavité et au trou central, dans laquelle on a placé un aimant multipolaire 100 en forme de couronne. Cet aimant est par exemple découpé dans une feuille de caoutchouc chargé de matière magnétique puis aimanté selon une succession de poles alternativement nord et sud. Il est utile pour assurer une bonne attraction du disque de prévoir un léger dépassement de l'aimant par rapport au plan du fond de la cavité 15.

Un tel aimant ne peut attirer un disque que si celui-ci présente des propriétés magnétiques. Pour cela on a modifié un vidéo-disque souple classique de la manière représentée sur la figure 1. Ce disque 3, comprend une zone gravée limitée par les cercles 31 et 32, et un trou central 33 destiné au passage de l'axe de rotation de l'appareil lecteur. On a collé sur la face non gravée un étiquette 34 que l'on voit par transparence sur la figure, comprenant un trou central 35 de diamètre légèrement plus grand que le trou 33, et dont le bord extérieur est découpé selon une forme ondulée. Cette étiquette 34 peut comporter une inscription et sert de support à un ensemble de pastilles magnétiques 36. Ainsi quand le disque est placé dans la cavité 15 du plateau 1, avec sa face non gravée tournée vers la surface de cette cavité, l'aimant 100 attire les pastilles 36 et maintient le centre du disque plaqué contre cette surface et de ce fait l'immobilise. Il en résulte que tout d'abord la face non gravée ne peut plus que toucher le fond de la cassette sans avoir de mouvement relatif par rapport à elle, ce qui minimise considérablement les risques de dégats dûs à ce contact et supprime en particulier des dangers de rayures. Ensuite lorsque l'on retourne la cassette de telle manière que l'ouverture de la cavité 15 soit tournée vers le bas, le disque 3 tend à retomber du côté de sa face gravée vers la pochette, et comme il est retenu par son centre, il se courbe en forme de cloche de telle manière qu'il ne touche cette pochette que selon une couronne circulaire limitée par son périmètre extérieur et dont la largeur dépend du poids du disque, de sa raideur, et de la profondeur de la cavité 15. Avec les disques usuels on obtient facilement pour une profondeur très faible de la cavité une largeur de cette couronne d'appui suffisamment faible pour que la partie gravée ne touche pas le fond de la cavité. La face gravée ne peut donc toucher la pochette et de ce fait n'est pas susceptible d'être détériorée par un tel contact.

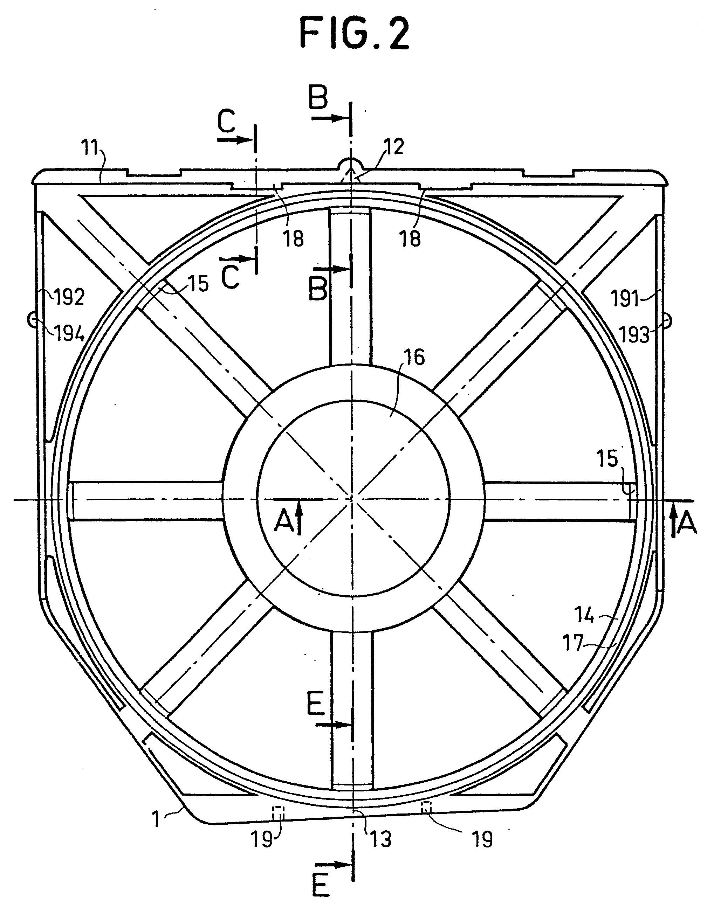

Dans un exemple de réalisation selon cette approche de l'art, il a été utilisé un vidéo-disque classique en PVC de 15/100 mm d'épaisseur, de 300 mm de diamètre, percé d'un trou central de 15 mm de diamètre et gravé sur une face entre deux cercles de diamètres 296 mm et 120 mm. Sur ce disque on a collé une étiquette comme celle de la figure 2 percée d'un trou central de 20 mm de diamètre et comportant régulièrement réparties sur un cercle de 90 mm de diamètre 10 pastilles en acier de diamètre 10 mm et d'épaisseur 0,06 mm. Cette étiquette, équipée des pastilles pesait environ 5 g.

L'invention, tout en conservant les avantages de l'approche qui vient d'être décrite, propose un agencement de cassette, comportant également un plateau et une pochette, et permettant en outre de protéger un disque optique portant des informations sur ses deux faces. L'agencement de cette cassette est telle qu'il n'y ait aucun frottement avec les parties du disque portant des informations au cours des manipulations, du stockage et du transport ainsi qu'au cours des opérations de chargement et de déchargement du disque dans l'appareil lecteur. Dans ce qui suit, on appellera partie gravée les parties du disque portant des informations, ce sans limiter l'invention à un procédé particulier d'enregistrement d'informations sur un disque. La cassette protège également le disque des poussières pendant les périodes de stockage hors de l'appareil lecteur.

Une réalisation concrète d'un plateau selon l'invention est décrite en relation avec la figure 2. Ce plateau est réalisé de préférence en matière plastique moulée par injection. Ce plateau 1 a la forme générale d'une plaque rectangulaire évidée par endroits et dont l'épaisseur moyenne est comprise dans une gamme de 1,2 à 1,4 mm. Ce plateau possède un épaulement 11 sur lequel vient buter l'extrémité ouverte de la pochette, comme il sera décrit ultérieurement. Sur cet épaulement 11 est réalisé un évidement triangulaire 12 sur la partie inférieure, évidement permettant l'accrochage du plateau par un doigt rétractable solidaire de l'appareil lecteur. L'épaisseur de cet épaulement, que l'on nommera partie avant, est de l'ordre de 12 mm et a été fixée pour des raisons de compatibilité avec des appareils lecteurs actuellement existants. Cette donnée n'est en aucune façon limitative de l'invention. Cette épaisseur fixe par ailleurs l'épaisseur hors tout de la cassette mais peut être diminuée d'environ 50% de sa valeur si l'on désire diminuer l'encombrement de la cassette, notamment pendant son stockage en dehors de l'appareil lecteur.

La partie arrière du plateau 13 a été profilée en biseau de manière à faciliter l'introduction du plateau dans la pochette. Un cavité 14 est creusée sur la face supérieure du plateau pour y loger le disque. La profondeur de cette cavité doit être adaptée à l'épaisseur du disque introduit dans la cassette. A titre d'exemple non limitatif, certains disques souples actuellement en usage une épaisseur d'environ 150 microns. La profondeur de la cavité peut également être augmentée pour pouvoir stocker et protéger des disques rigides, gravés sur leurs deux faces et dont l'épaisseur est notablement supérieure à celle des disques souples.

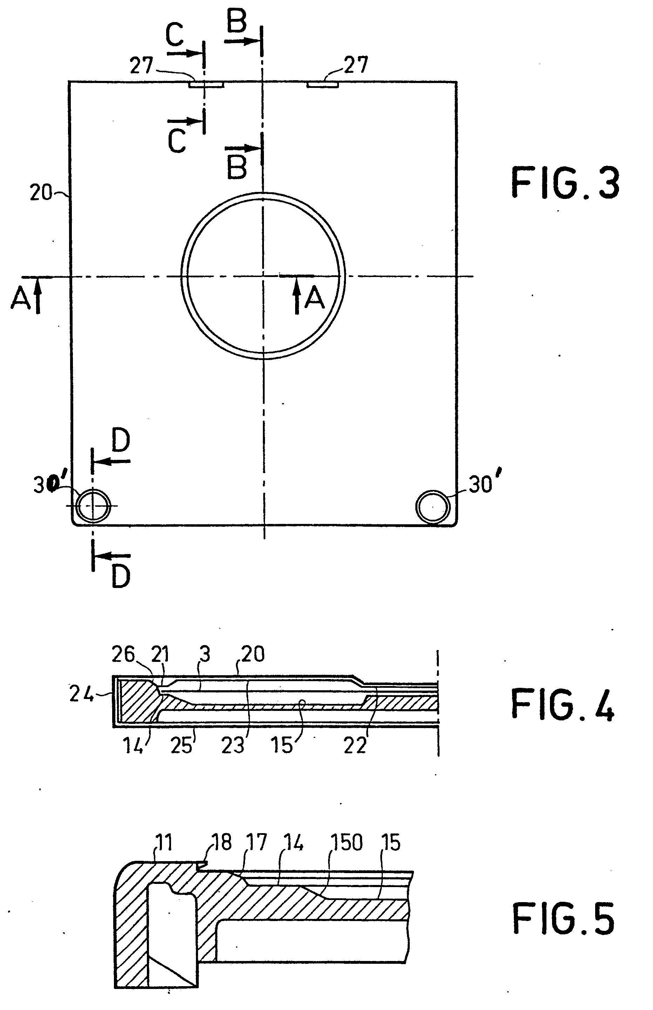

Le disque est centré dans la cavité 14 avec un jeu d'environ 0.5 mm et le bord de la cavité présente une dépouille de 20° comme illustré plus en détail sur la figure 5 (coupe de détail selon l'axe BB de la figure 2). Pour éviter le frottement de la zone gravée du disque avec le plateau, et ceci constitue un des agencements principaux de l'invention, on a creusé dans le fond de la cavité 14, une couronne circulaire 15 de 1 à 1,5 mm de profondeur et dont les diamètres intérieurs $\Phi_i$ et extérieur $\Phi_e$ sont compatibles avec ceux délimités par la zone gravée du disque.

A titre d'exemple, des disques connus ont un diamètre hors tout d'environ 301 mm et les caractéristiques suivantes:

$$293 < \Phi'_e < 294 \text{ mm}$$
$$109 < \Phi'_i < 110 \text{ mm}$$

avec $\Phi'_e$ diamètre correspondant au début du programme enregistré et $\Phi'_i$ diamètre correspondant à la fin du programme enregistré.

Le raccordement entre le fond de la cavité 14 et le fond de la couronne 15 circulaire se fait en pente douce 150 au niveau du diamètre $\Phi'_e$ du disque pour éviter que le disque 3 n'accroche une arrête vive.

Pour permettre le passage de l'axe du moteur entrainant le disque 3 en rotation quand le plateau est introduit dans l'appareil lecteur, un trou central 16 (figure 2) a été pratiqué sur le plateau.

On réalise enfin autour de la cavité 14 une portée conique 17 sur laquelle viendra plaquer, comme il sera décrit ultérieurement, la même portée conique moulée sur l'une des faces intérieures de la pochette.

Comme il a été rappelé, le plateau 1 est évidé dans toutes ses parties non fonctionnelles de façon à réduire son prix de revient. Par ailleurs les matériaux utilisables pour sa réalisation peuvent être choisis à titre d'exemple non limitatif parmi les matériaux suivants: polyamid, ABS traité anti-statique et résistant aux chocs.

La pochette 2 est décrite en relation avec les figures 3 et 4 (coupe suivant l'axe AA), représentant respectivement une vue d'ensemble et une demie coupe de la pochette 2. Cette pochette comprend un couvercle 20 d'un profil particulier et comportant lui-même des surfaces 21 et 22, constituant des plans de repos pour le disque lorsque la cassette se retrouve retournée dans l'espace par rapport à la position illustrée sur la figure 4, et un évidement en forme de couronne circulaire 23 correspondant aux diamètres $\Phi'_i$, $\Phi'_e$, respectivement des fins de programme enregistré et début de programme enregistré. La cassette comprend également une paroi arrière non représentée, un fond 25 et des parois latérales (par exemple 24), la partie opposée au fond étant laissée ouverte pour permettre l'introduction du plateau dans la pochette 2.

Sur la partie avant de la cassette, la pochette comporte également une portée conique 26 destinée à s'appuyer sur la partie conique correspondante 17 du plateau sous l'influence de profils complémentaires 18 et 27 respectivement dans la partie avant du plateau et la partie avant du couvercle de la pochette, comme illustré sur la figure de détail 6. Cette figure est une coupe partielle selon l'axe CC de la figure 2.

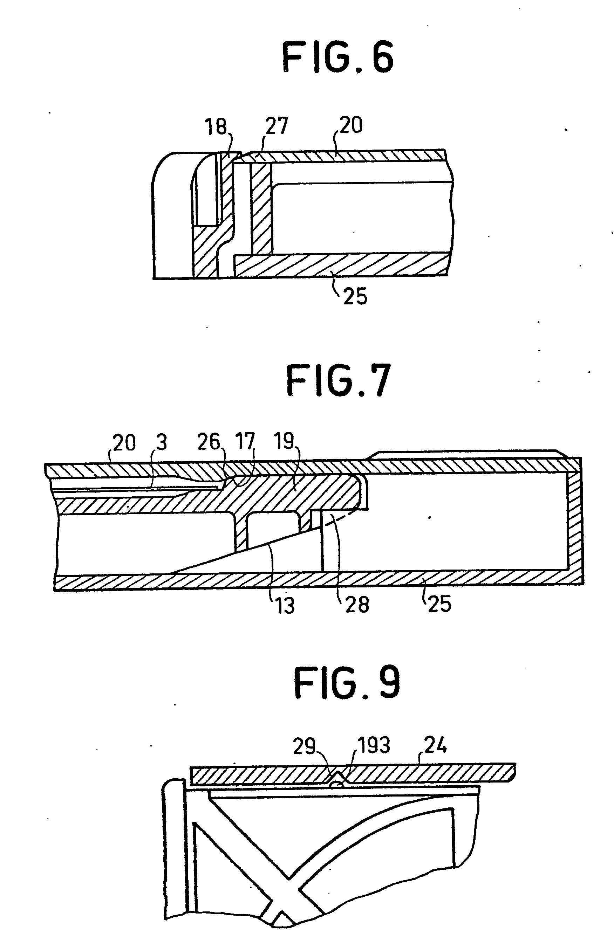

De la même manière, sur la partie arrière de la cassette, illustrée par la figure 7 (coupe partielle selon l'axe EE de la figure 2) des profils complémentaires 19 et 28 pratiqués respectivement sur le plateau et la pochette assur l'appui de la portée conique 17 sur la portée conique 26.

On va maintenant décrire comment coopèrent les deux éléments principaux de la cassette, le plateau 1 et la pochette 2, notamment lors des opérations de chargement et de déchargement de la cassette dans l'appareil lecteur de disque. La pochette 2 glisse sur les deux faces du plateau 1 et pince celui-ci lorsque l'ensemble est fermé.

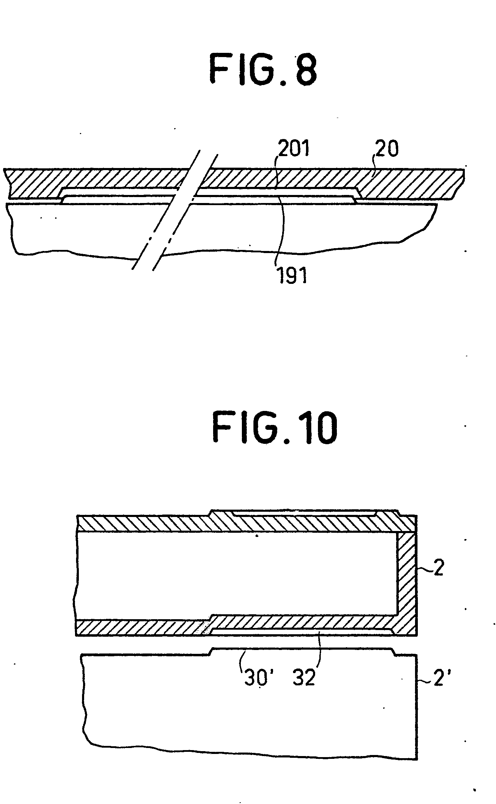

Pour aider ce glissement, des rampes 191 et 192 (figure 2) sont aménagées de part et d'autre du plateau. L'une, 191, est illustrée sur la figure 8 avec plus détail.

Une rainure complémentaire, par exemple 201, est aménagée dans le couvercle 20 de la pochette 2 et s'encastre sur la rampe 191.

Un système d'encliquetage permet alors un verrouillage entre la pochette 2 et le plateau 1 pour éviter toute ouverture intempestive au cours de manipulations brusques. Pour ce faire, on pratique des bossages 193, 194 sur les flancs du plateau 1.

La figure 9 illustre plus en détail un de ses bossages 193. Des nervures verticales, dont l'une 29 est représentée sur la figure 9, sont pratiquées dans les parois latérales de la pochette 2. L'encliquetage est réalisé par pénétration des bossages dans ces nervures verticales.

Comme il a été indiqué, la face intérieure de la pochette, 23, en regard du disque 3 possède la même forme que celle de l'évidement 15 creusé dans le lamage du plateau, ceci afin que, quelle que soit l'orientation de la cassette dans l'espace, le disque 3 ne repose que sur ses parties non gravées.

Suivant que la cassette soit posée à l'endroit ou à l'envers, le disque 3 est entré dans la cavité 14 du plateau 1 et repose, soit dans celui-ci, soit sur la face intérieur du couvercle da la pochette et, dans les deux cas, il n'y a aucon contact avec les zones du disque portant des informations.

Lorsque la pochette 2 est refermée sur le plateau 1, le contact entre la pochette et le plateau est assuré par l'appui des profils complémentaires 18 et 27 comme il a été décrit en relation avec la figure 6. L'ensemble forme de ce fait un compartiment étanche aux poussières. D'autre part, toujours lorsque la pochette 2 est refermée sur le plateau 1, la portée conique 17 réalisée autour de la cavité 14 du plateau 1 appuie sur la portée conique 26 réalisé sur la face intérieure de la pochette 2. Ce contact crée un chicane conique empéchant le disque 3 de glisser entre la pochette 2 et le plateau 1, au risque de se détruire. L'angle du cône est réalisé de tel sorte que le glissement de la pochette 2 sur le plateau lors de l'ouverture de la cassette s'accompagne d'un écartement des deux lèvres de la pochette, lèvres constituées par le couvercle 20 et le fond 25, par déformation plastique d'environ 1 mm. Cette valeur s'entend pour une cassette dont les autres caractéristiques dimensionnelles sont celles qui ont été citées précédemment.

Lorsque l'on désire lire le disque 3 contenu dans la cassette, celle-ci est introduite dans une fente pratiquée dans l'appareil lecteur. Un système propre à l'appareil lecteur extrait de la pochette 2, le plateau 1 supportant le disque 3. Le glissement des deux portées coniques 17 et 26 l'une sur l'autre impose une déformation élastique à l'une des faces de la pochette de manière à ce qu'elle ne frotte pas la surface du disque 3 en regard. Les rampes de glissement 191 et 192 réalises sur le plateau favorisent également cette fonction en reportant le jeu nécessaire à ce glissement sur la face du plateau où se trouve le disque. Pendant cette phase, nommée mouvement d'entrée-sortie de la pochette, la déformation élastique induit une augmentation de l'épaisseur de la cassette, comme il a été rappelé, de l'ordre de 1 mm. L'extraction du plateau 1 s'effectue, comme il est connu, à l'aide d'un doigt entrant dans l'évidement triangulaire 12 a été décrit en relation avec la figure 2.

L'appareil de lecture du disque, comprenant notamment le mécanisme précité, sort du cadre de l'invention et ne sera pas décrit. Il est en tout point identique aux appareils lecteur de l'art connu.

Enfin, un gerbage des cassettes les unes sur les autres est réalisable des façon simple au moyen de deux bossages 30' (figure 3) pratiqués dans le couvercle de la pochette 2 et de deux cavités de formes complémentaires pratiqués dans le fond de cette pochette 2. La figure 10 (coupe suivant DD) illustre l'un de ces bossages 30' et l'une de ces cavités 32 plus en détail. Les deux cassettes 2 et 2' sont empilées l'une sur l'autre en alignant les bossages 30' et cavités 32 correspondants.

En résumé, la cassette selon l'invention permet la protection contre toute atteinte à l'intégrité de disques optiques gravés sur leurs deux faces. Elle permet également leur lecture de façon entièrement automatique sans autre manipulation que l'introduction de la cassette dans l'appareil lecteur. Enfin, elle assure une étanchéité suffisante pour éviter l'altération de l'information portée par le disque stocké par introduction de corps étrangers, tels que poussières, à l'intérieur de la cassette.

Cependant, bien que particulièrement adaptée à la conservation de disque double face, tout autres disques tels que disques monofaces ou disques multicouches peuvent être emmagasinés dans des cassettes de l'invention. Ces disques peuvent être souples ou rigides indifféremment.

**Revendications**

1. Cassette pour disque optique du type comprenant un plateau (1) muni d'une première cavité circulaire (14) destiné à recevoir un disque optique (3), et une pochette (2) destinée à contenir le plateau (1); la pochette (2) étant munie d'une ouverture par laquelle le plateau (1) peut être introduit et le disque optique (3) comportant au moins une zone d'enregistrement délimitée par deux cercles concentriques d'un premier diamètre ($\mathit{\Phi}'_i$) et d'un second diamètre ($\mathit{\Phi}'_e$) déterminés; cassette caractérisée en ce qu'elle comporte une deuxième cavité (15) en forme d'anneau pratiquée dans le fond du plateau (1), de diamètres intérieur ($\mathit{\Phi}_i$) et extérieur ($\mathit{\Phi}_e$) respectivement inférieur et supérieur aux premier ($\mathit{\Phi}'_i$) et second ($\mathit{\Phi}'_e$) diamètres déterminés; une troisième cavité (23) également en forme d'anneau, de dimensions sensiblement égales à celles ($\mathit{\Phi}_i$, $\mathit{\Phi}_e$) de la deuxième cavité (15), pratiquée sur la face interne du couvercle (20) de la pochette (2); les deuxième (15) et troisième (23) cavités étant concentriques lorsque le plateau (1) est introduit dans la pochette (2) et des portées coniques complémentaires (17, 26) sont pratiquées en périphérie des deuxième (15) et troisième (23) cavités en forme d'anneau, en appui l'une sur l'autre lorsque le plateau (1) est à l'intérieur de la pochette (2).

2. Cassette selon la revendication 1 caractérisé en ce qu'en outre le plateau comporte un épaulement (11) d'épaisseur sensiblement égale à l'épaisseur de la pochette (2) destinée à venir buter sur l'extrémité ouverte de la pochette (2) lorsque le plateau (1) y est introduit et en ce que des profils complémentaires (18, 27) sont pratiqués respectivement sur l'épaulement (11) du plateau (1) et sur la face externe du couvercle (20) de la pochette (2) de manière à parfaire l'appui réciproque des portées coniques complémentaires (17, 26) par déformation plastique de la pochette (2).

3. Cassette selon la revendication 1 caractérisée en ce que l'extrémité (13) du plateau (1) opposée à l'épaulement (11) est dotée d'un profil en forme de biseau pour faciliter l'introduction du plateau (1) à l'intérieur de la pochette (2) et en ce que cette extrémité (13) et le fond (25) de la pochette (2) ont des profils complémentaires (19, 28) pour également parfaire l'appui réciproque des portées coniques complémentaires (17, 26) par déformation plastique de la pochette (2).

4. Cassette selon l'une quelconque des revendications 1 à 3 caractérisée en ce que la cassette est pourvue de verrouillage comprenant des bossages (192, 193) sur les flancs du plateau (1) et des évidements (29) de profils complémentaires pratiqués sur la face interne des parois latérales (24) de la pochette (2) destinées à recevoir les bossages lorsque le plateau (1) est introduit dans la pochette (2).

5. Cassette selon l'une quelconque des revendications 1 à 4 caractérisée en outre en ce que le plateau (1) est muni en périphérie de deux rampes (191, 192) en surépaisseur s'étendant sur une longueur prédéterminée et en ce que la pochette (2) est également munie de deux rainures (201) de profils complémentaires à ceux des rampes, les rampes (191, 192) et les rainures (201) coopérant pour faciliter l'introduction correcte du plateau (1) dans la pochette (2) et écartant légèrement l'un de l'autre, par déformation plastique, le couvercle (20) et le fond (25) de la pochette (2) lors des opérations d'introduction et d'extraction du plateau (1), respectivement dans et hors de la pochette (2).

6. Cassette selon l'une quelconque des revendications 1 à 5 caractérisée en ce que la pochette (2) est pourvue de bossages (30') et de cavités (32) de profils complémentaires, respectivement sur les faces externes du couvercle (20) et sur le fond (25), permettant le gerbage de plusieurs cassette (2, 2').

7. Cassette selon l'une quelconque des revendications 1 à 6 caractérisée en ce que la pochette (2) et le plateau (1) sont en matière plastique.

**Patentansprüche**

1. Kassette für optische Platte, vom Typ mit einem Tablett (1), das mit einem ersten kreisrunden Hohlraum (14) versehen ist, der dazu bestimmt ist, eine optische Platte (3) aufzunehmen, und einer Hülle (2), die dazu bestimmt ist, das Tablett (1) aufzunehmen; wobei die Hülle (2) mit einer Öffnung versehen ist, durch die hindurch das Tablett (1) eingeführt werden kann, und die optische Platte (3) wenigstens eine Aufzeichnungszone aufweist, die durch zwei konzentrische Kreise mit einem ersten bestimmten Durchmesser ($\Phi'_i$) bzw. einem zweiten bestimmten Durchmesser ($\Phi'_e$) begrenzt ist; wobei die Kassette dadurch gekennzeichnet ist, daß sie einen zweiten Hohlraum (15) von der Form eines Ringes aufweist, der im Boden des Tabletts (1) gebildet ist und einen Innendurchmesser ($\Phi_i$) und Außendurchmesser ($\Phi_e$) aufweist, von denen der erste kleiner und der zweite größer als der erste bestimmte Durchmesser ($\Phi'_i$) bzw. zweite bestimmte Durchmesser ($\Phi'_e$) ist; wobei ein dritter Hohlraum (23), der ebenfalls ringförmig ist und dessen Abmessungen im wesentlichen denen ($\Phi_i$, $\Phi_e$) des zweiten Hohlraumes (15) gleichen, auf der Innenseite des Deckels (20) der Hülle (2) angebracht ist; wobei der zweite Hohlraum (15) und der dritte Hohlraum (23) konzentrisch sind, wenn das Tablett (1) in die Hülle (2) eingeführt ist, und wobei konische komplementäre Umfangsränder (17, 26) am Umfang des zweiten (15) bzw. dritten (23) ringförmigen Hohlraumes gebildet sind, welche in Anlage aneinander sind, wenn das Tablett (1) sich im Inneren der Hülle (2) befindet.

2. Kassette nach Anspruch 1, dadurch gekennzeichnet, daß das Tablett ferner eine Schulter (11) aufweist, deren Dicke ungefähr gleich der Dicke der Hülle (2) ist und die dazu bestimmt ist, an dem offenen Ende der Hülle (2) in Anlage zu kommen, wenn das Tablett (1) darin eingeschoben ist, und daß komplementäre Profile (18, 27) an der Schulter (11) des Tabletts (1) bzw. an der Außenfläche des Deckels (20) der Hülle (2) angebracht sind, um die gegenseitige Abstützung der konischen komplementären Umfangsränder (17, 26) durch plastische Deformierung der Hülle (2) zu vervollkommnen.

3. Kassette nach Anspruch 1, dadurch gekennzeichnet, daß das der Schulter (11) gegenüberliegende Ende (13) des Tabletts (1) mit einem keilförmigen Profil versehen ist, um die Einführung des Tabletts (1) in die Hülle (2) zu erleichtern, und daß dieses Ende (13) sowie der Boden (25) der Hülle (2) komplementäre Profile (19, 28) aufweisen, um ebenfalls die gegenseitige Abstützung der komplementären Umfangsränder (17, 26) durch plastische Deformierung der Hülle (2) zu vervollkommnen.

4. Kassette nach einem der Ansprüche 1 bis 3, dadurch gekennzeichnet, daß die Kassette mit einer Verrastung versehen ist, die Erhebungen (192, 193) an den Flanken des Tabletts (1) sowie Aussparungen (29) komplementären Profils umfaßt, welche an der Innenfläche der Seitenwände (24) der Hülle (2) angebracht und dazu bestimmt sind, die Erhebungen aufzunehmen, wenn das Tablett (1) in die Hülle (2) eingeschoben ist.

5. Kassette nach einem der Ansprüche 1 bis 4, dadurch gekennzeichnet, daß das Tablett (1) ferner an seinem Umfang mit zwei Rampen (191, 192) versehen ist, die Verdickungen bilden und sich über eine vorbestimmte Länge erstrecken, und daß die Hülle (2) ferner mit zwei Rillen (201) versehen ist, deren Profil komplementär zu dem der Rampen ist, wobei die Rampen (191, 192) und die Rillen (201) miteinander zusammenwirken, um die korrekte Einführung des Tabletts (1) in die Hülle (2) zu erleichtern, und den Deckel (20) sowie den Boden (25) der Hülle (2) leicht voneinander durch plastische Deformierung spreizen, während das Tablett (1) in die Hülle (2) eingeschoben bzw. aus dieser herausgezogen wird.

6. Kassette nach einem der Ansprüche 1 bis 5, dadurch gekennzeichnet, daß die Hülle (2) mit Erhebungen (30') und Hohlräumen (32) komplementären Profils versehen ist, von denen erstere an den Außenflächen des Deckels (20) und letztere an dem Boden (25) gebildet sind, um das Aufeinanderstapeln von mehreren Kassetten (2, 2') zu ermöglichen.

7. Kassette nach einem der Ansprüche 1 bis 6, dadurch gekennzeichnet, daß die Hülle (2) und das Tablett (1) aus Plastikmaterial gebildet sind.

**Claims**

1. Cassette for an optical disc of the type comprising a plate (1) provided with a first circular cavity (14) intended to receive an optical disc (3) and an enclosure intended to contain the plate (1); the enclosure (2) is provided with an opening through which the plate (1) can be introduced and the optical disc (3) comprises at least one recording zone defined by two concentric circles of a first predetermined diameter ($\Phi'_i$) an a second predetermined diameter ($\Phi'_e$); the cassette is characterized in that it comprises a second cavity (15) in the form of a ring formed in the bottom of the plate (1) and having interior ($\Phi_i$) and exterior ($\Phi_e$) diameters respectively smaller and greater than the first ($\Phi'_i$) and second ($\Phi'_e$) predetermined diameters; a third cavity (23) also having the form of a ring of dimensions substantially equal to those ($\Phi_i$, $\Phi_e$) of the second cavity (15) formed on the inner face of the cover (20) of the enclosure (2); the second (15) and third (23) cavities are concentric when the plate (1) is introduced into the enclosure (2) and complementaryconical peripheral edges (17, 26) are formed at the periphery of the second (15) and third (23) cavities having the form of a ring, bearing on each other when the plate (1) is inside the enclosure (2).

2. Cassette according to claim 1 characterized in that the plate also comprises a shoulder (11) of thickness substantially equal to the thickness of the enclosure (2) intended to abut on the open end of the enclosure (2) when the plate (1) is introduced therein and in that complementary profiles (18, 27) are formed respectively on the shoulder (11) of the plate (1) and on the outer face of the cover (20) of the enclosure (2) so as to complete the reciprocal support of the complementary conical peripheral edges (17, 26) by plastic deformation of the enclosure (2).

3. Cassette according to claim 1, characterized in that the end (13) of the plate (1) opposite the shoulder (11) is provided with a wedge-shaped profile to facilitate introduction of the plate (1) into the interior of the enclosure (2) and that said end (13) and the bottom (25) of the enclosure (2) have complementary profiles (19, 28) likewise for completing the reciprocal support of the complementary conical peripheral edges (17, 26) by plastic deformation of the enclosure (2).

4. Cassette according to any one of claims 1 to 3, characterized in that the cassette is provided with detent means comprising protrusions (192, 193) on the flanks of the plate (1) and recesses (29) of complementary profile formed in the inner face of the lateral walls (24) of the enclosure (2) and intended to receive the protrusions when the plate (1) is introduced into the enclosure (2).

5. Cassette according to any one of claims 1 to 4, characterized further in that the plate (1) is provided at the periphery with two ramps (191, 192) forming thickenings and extending over a predetermined length, and that the enclosure (2) is likewise provided with two grooves (201) with profiles complementary to those of the ramps, the ramps (191, 192) and the grooves (201) cooperating to facilitate the correct introduction of the plate (1) into the enclosure (2) and by plastic deformation moving the cover (20) and the bottom (25) of the enclosure (2) slightly further apart from each other during the operations of introduction and withdrawal of the plate (1) into and out of the enclosure (2) respectively.

6. Cassette according to any one of claims 1 to 5, characterized in that the enclosure (2) is provided with protrusions (30') and cavities of complementary profile and disposed respectively on the outer faces of the cover (20) and on the bottom (25), which permit the stacking of several cassettes (2, 2').

7. Cassette according to any one of claims 1 to 6, characterized in that the enclosure (2) and the plate (1) are of plastic material.

FIG.1

# FIG.2

FIG.3

FIG.4

FIG.5

13

# FIG. 6

# FIG. 7

# FIG. 9

# FIG. 8

# FIG. 10